# EUROPÄISCHE PATENTSCHRIFT

(11) **EP 3 172 071 B1**
(45) Veröffentlichungstag und Bekanntmachung des Hinweises auf die Patenterteilung: **06.06.2018**
(21) Anmeldenummer: 15730067.4
(22) Anmeldetag: 22.06.2015
(51) Int. Cl.: B60G 17/015, B60G 17/016, B62D 17/00

(54) **VORRICHTUNG ZUM VERSTELLEN VON STURZ UND/ODER SPUR EINES FAHRZEUGRADS**
DEVICE FOR ADJUSTING CAMBER AND/OR TRACK OF A VEHICLE WHEEL
DISPOSITIF DE RÉGLAGE DU CARROSSAGE ET/OU DU PINCEMENT D'UN VÉHICULE À MOTEUR

(30) Priorität: 26.07.2014 DE 102014011110
(43) Veröffentlichungstag der Anmeldung: 31.05.2017
(73) Patentinhaber: Audi AG, 85045 Ingolstadt (DE)
(72) Erfinder: KLINGER, Thomas, 85057 Ingolstadt (DE); SCHMID, Wolfgang, 85354 Freising (DE); BERINGER, Heinrich, 85095 Denkendorf (DE); GLAS, Achim, 85080 Gaimersheim (DE); VOLL, Ulrich, 80336 München (DE); BRAUMANDL, Michael, 85391 Allershausen (DE); POURROY-SOLARI, Vincent, 74230 Thones (FR)
(74) Vertreter: Reichert, Thomas Klaus
(86) Internationale Anmeldenummer: PCT/EP2015/001256
(87) Internationale Veröffentlichungsnummer: WO 2016/015801

(56) Entgegenhaltungen:
- WO-A2-2011/020534
- DE-A1-102008 048 568
- DE-A1-102009 006 903
- DE-A1-102009 021 093
- DE-A1-102009 058 489

## Beschreibung

Die Erfindung betrifft eine Vorrichtung zum Verstellen von Sturz und/oder Spur eines Kraftfahrzeugrades nach dem Oberbegriff des Patentanspruches 1.

Aus der DE 10 2009 058 489 A1 ist eine Vorrichtung bekannt, bei der ein Radträger für ein Fahrzeugrad mehrteilig gestaltet ist, und zwar mit einem radseitigen Trägerteil und einem achsseitigen Führungsteil sowie mit dazwischen angeordneten Drehteilen. Im radseitigen Trägerteil ist ein Radlager integriert, in dem ein Radnabenabschnitt eines, das Fahrzeugrad tragenden Radflansches drehbar gelagert ist. Am achsseitigen Führungsteil sind die Lenker der Radaufhängung des Fahrzeugs anlenkbar. Die dazwischen angeordneten Drehteile wirken mit Schrägflächen zusammen, die eine zur Drehachse des achsseitigen Drehteils geneigte Drehachse des radseitigen Drehteils definieren. Auf diese Weise kann bei einem Drehantrieb zumindest eines der Drehteile das radseitige Drehteil zur Spur- oder Sturzverstellung des Fahrzeugrads um einen Taumelpunkt verschwenkt werden.

Bei einem Bremsvorgang werden die von der Bremsanlage generierten Bremskräfte und -momente über den Radträger zum Fahrzeugaufbau geleitet, wodurch die Gefahr besteht, dass das Sturz- und/oder Spurverhalten des Radträgers unbeabsichtigt beeinflusst wird. So ist beim Bremsvorgang das radseitige Trägerteil über den in Bremseingriff befindlichen Bremssattel mit einem Bremsmoment beaufschlagt. Um eine Einleitung des Bremsmomentes in die beiden Drehteile zu vermeiden, ist das radseitige Trägerteil in der DE 10 2009 058 489 A1 über eine Drehmomentbrücke, das heißt ein Kardangelenk, auf dem achsseitigen Führungsteil abgestützt.

Zusätzlich wirken beim Bremsvorgang Kräfte und Momente auf das Fahrzeugrad, wodurch die Gefahr besteht, dass das Sturz- und/oder Spurverhalten des Radträgers unbeabsichtigt beeinflusst wird. Beispielhaft sei eine auf das Fahrzeugrad wirkende Bremskraft-Längskomponente genannt, mit der ein am Fahrzeugrad angreifendes Längsmoment erzeugt wird, das das Fahrzeugrad in Richtung Nachspur drückt. Zudem sei der Bremsnickausgleich hervorgehoben. Ein solcher Bremsnickausgleich ergibt sich, wenn das abgebremste Fahrzeug aufgrund seiner Massenträgheit eine Bewegung um die Fahrzeug-Querachse, das heißt ein Abtauchen der Frontpartie, ausführt. In diesem Fall greift am Fahrzeugrad eine Bremskraft-Vertikalkomponente an, mit der ein auf das Fahrzeugrad wirkendes Vertikalmoment erzeugt wird, das zu einer Sturzmomentänderung am Aktor der Drehteile führt.

Diese exemplarisch hervorgehobenen Vertikal- und Längsmomente summieren sich (gegebenenfalls zusammen mit noch anderen, beim Bremsvorgang auftretenden Momenten) zu einem Gesamt-Fahrzeugradmoment, das als ein Reaktionsmoment auf die Drehteile einwirkt. Das Reaktionsmoment beaufschlagt unmittelbar den Drehantrieb der Drehteile und muß nicht zwangsläufig identisch mit dem Gesamt-Fahrzeugradmoment sein. Vielmehr kann das Reaktionsmoment auch vom Gesamt-Fahrzeugradmoment unterschiedlich sein, und zwar in Abhängigkeit von unter anderem den aktuellen Drehpositionen der Drehteile und/oder von der aktuellen Lage der zwischen den Drehteilen gebildeten Schrägebene.

Damit das auf die Drehteile einwirkende Gesamt-Fahrzeugradmoment nicht zu einer unbeabsichtigten Drehverstellung der Drehteile führt, muss im Stand der Technik der Drehantrieb des radseitigen und des achsseitigen Drehteils ein entgegengesetztes Kompensationsmoment bereitstellen. Hierzu sind entsprechende bauliche Maßnahmen am Drehantrieb vorzunehmen, um diesen zum Beispiel selbsthemmend auszuführen, oder steuerungstechnische Maßnahmen, um durch Ansteuerung des Drehantriebs das Kompensationsmoment zu erzeugen.

Aus der DE 10 2008 048568 A1 ist eine gattungsgemäße Vorrichtung zum Verstellen einer Sturz und/oder Spur eines Fahrzeugrads bekannt.

Die Aufgabe der Erfindung besteht darin, eine Vorrichtung bereitzustellen, bei der selbsttätig ohne Eingriff des Drehantriebes der Drehteile beim Bremsvorgang eine Sturz- und/oder Spuränderung in einfacher Weise reduzierbar ist.

Die Aufgabe ist durch die Merkmale des Patentanspruches 1 gelöst. Bevorzugte Weiterbildungen der Erfindung sind in den abhängigen Ansprüchen offenbart.

Efindungsgemäß ist die Drehmomentbrücke zwischen dem radseitigen Trägerteil und dem achsseitigen Führungsteil als ein Drehmomentübertragungselement ausgelegt, das bei der Abstützung des mit dem Bremsmoment beaufschlagten Trägerteils am Führungsteil eine Kraftkomponente erzeugt, mit der das radseitige Trägerteil beim Bremsvorgang beaufschlagt wird. Das Drehmomentübertragungselement wandelt somit das Bremsmoment in die Kraftkomponente um. Mittels der Kraftkomponente kann ein unbeabsichtigtes Lenken des radseitigen Trägerteils aufgrund kinematischer Eigenschaften des Radträgers beim Bremsvorgang verhindert werden, was ansonsten zu einer unbeabsichtigten Sturz- oder Spuränderung des Fahrzeugrades beim Bremsvorgang führen würde.

Das Drehmomentübertragungselement ist zumindest eine Koppelstange, die sowohl auf Zug als auch auf Druck beanspruchbar ist. Die Koppelstange ist jeweils an einer radseitigen Anlenkstelle am radseitigen Trägerteil und an einer achsseitigen Anlenkstelle um achsseitigen Führungsteil angelenkt. Herkömmliche Drehmomentbrücken, etwa ein Kardangelenk oder ein Metallbalg, sind alleine im Hinblick auf eine einwandfreie Bremsmoment-Abstützung ausgelegt, das heißt torsionssteif mit Bezug auf die Radachse, jedoch in der Fahrzeugquerrichtung ausreichend nachgiebig, um die Taumelbewegung des radseitigen Drehteils mit daran gekoppeltem Trägerteil nicht zu beeinträchtigen. Eine solche Drehmomentbrücke ist jedoch nicht in der Lage, die oben erwähnte gerichtete Kraftkomponente auf das radseitige Trägerteil auszuüben.

Die Koppelstange ist dabei so zwischen dem radseitigen Trägerteil und dem achsseitigen Führungsteil angeordnet, dass diese unter Ausübung des Bremsmomentes dazwischen verstemmt wird, das heißt die Koppelstange beaufschlagt an ihrer radseitigen Anlenkstelle das radseitige Trägerteil mit der gerichteten Kraftkomponente. Die rad- und achsseitigen Anlenkstellen des Drehmomentübertragungselements, das heißt der Koppelstange, sind bevorzugt nicht in der Fahrzeugquerrichtung in Flucht zueinander ausgerichtet, sondern rein beispielhaft vielmehr in der Fahrzeuglängsrichtung um einen Längsversatz voneinander beabstandet. Auf diese Weise wird beim Bremsvorgang die oben beschriebene Stemmwirkung erreicht, bei der die Koppelstange das Trägerteil mit der gerichteten Kraftkomponente beaufschlagt, mit der unter anderem eine Sturzmomentänderung reduziert wird, die aus dem Bremsnickausgleich resultiert.

Die genaue Lage der Anlenkstellen des Drehmomentübertragungselements hängt von den geometrischen Gegebenheiten des Radträgers ab. In Kenntnis der Erfindung kann der Fachmann unter Zuhilfenahme der Fachliteratur (etwa das Fachbuch "Gelenke und Gelenkwellen" von Schmelz, Seherr-Thoss, Aucktor) die genaue Lage der Anlenkstellen unmittelbar und eindeutig berechnen. Beispielhaft können die Positionen der Anlenkstellen K1, K2 des Drehmomentübertragungselements so bestimmt sein, dass im kompletten Bewegungsraum des Fahrzeugrads, das heißt zum Beispiel in einem Spurwinkelbereich von ± 6,5° und in einem Sturzwinkelbereich zwischen -5° und +2,5°, das beim Bremsvorgang, auf die Drehteile einwirkende, verbleibende Reaktionsmoment möglichst gering ist. Das verbleibende Moment berechnet sich aus der Differenz zwischen dem von dem Drehmomentübertragungselement ausgeübten Gegenhaltemoment und dem oben erwähnten Gesamt-Fahrzeugradmoment.

Entscheidend bei der Positionierung der Anlenkstellen sind deren Abstände zum Momentanpol in den Raumrichtungen. In einer beispielhaften bevorzugten Ausführungsform können die Anlenkstellen in der Fahrzeugquerrichtung betrachtet innerhalb des Momentanpols positioniert sein. Zudem können die Anlenkstellen in der Fahrzeuglängsrichtung betrachtet vor und hinter dem Momentanpol positioniert sein. In der Fahrzeughochrichtung können die Anlenkstellen ebenfalls versetzt zum Momentanpol positioniert sein. Die Anlenkstellen können somit, in der Fahrzeugquerrichtung betrachtet, nicht in Flucht hintereinander ausgerichtet sein, sondern in der Fahrzeuglängsrichtung um einen Abstand voneinander beabstandet sein.

In einer bevorzugten technischen Realisierung kann das radseitige Trägerteil des Radträgers über ein Drehlager auf dem radseitigen Drehteil abgestützt sein. Zudem kann in dem radseitigen Drehteil ein Radlager integriert sein. In dem Radlager ist ein Radnabenabschnitt eines, das Fahrzeugrad tragenden Radflansches drehbar gelagert. In diesem Fall trägt das radseitige Trägerteil nur noch den Bremssattel und gegebenenfalls den Antriebsmotor für das radseitige Drehteil. Dadurch wird die Lagerstelle zwischen dem radseitigen Drehteil und dem radseitigen Trägerteil aus dem Radkraftfluss genommen und kräftemäßig entlastet. Dies führt dazu, dass nur noch drei Lagerstellen in Serie im Radkraftfluss geschaltet sind. Die vierte Lagerstelle, das heißt das Drehlager zwischen dem radseitigen Trägerteil und dem radseitigen Drehteil, kann dagegen kleiner ausgelegt sein, da die auf dieses Drehlager einwirkenden Kräfte und Momente von zum Beispiel der Bremsanlage sehr viel geringer ausfallen. Weiterhin erhöht sich durch den Wegfall der vierten Lagerstelle aus dem Radkraftfluss die Sturzsteifigkeit des Lagerverbundes, wodurch die verbleibenden Lagerstellen bei gleichbleibender Sturzsteifigkeit wieder kleiner ausgeführt werden können. In Summe reduziert sich - im Vergleich zum Stand der Technik - der Bauraumbedarf sowie das Bauteilgewicht der Vorrichtung beträchtlich.

Bevorzugt kann das radseitige Trägerteil radial außerhalb des radseitigen Drehteils angeordnet sein, wodurch die Vorrichtung in Axialrichtung besonders kompakt gestaltet werden kann. In diesem Fall kann das Trägerteil über eine radial innere Lagermantelfläche unter Zwischenschaltung des Drehlagers auf einer radial äußeren Lagermantelfläche des radseitigen Drehteils abgestützt sein.

Das achsseitige Drehteil und das radseitige Drehteil können jeweils mit einem Antriebsmotor trieblich verbunden sein. Bevorzugt können die Drehteile jeweils Bestandteile eines Zahnradtriebs sein, bei dem der Elektromotor über eine Zahnradstufe das achsseitige und/oder radseitige Drehteil antreibt. Bei gleichsinniger oder gegensinniger Verdrehung der Drehteile erfolgt eine Verschwenkung des Trägerteils um einen vorgegebenen Spur- und/oder Sturzwinkel. Eine besonders bauraumsparende Anordnung ergibt sich, wenn das radseitige Drehteil einen Zahnradabschnitt aufweist, der Bestandteil des oben erwähnten Zahnradtriebs ist und in Axialrichtung betrachtet zwischen der Trägerteil-Abstützstelle und der Schrägfläche des radseitigen Drehteils angeordnet ist.

Um eine fertigungstechnisch einfache Einbindung der Vorrichtung in eine herkömmliche Radaufhängung zu ermöglichen, kann der Radträger ein achsseitiges Führungsteil aufweisen. Am achsseitigen Führungsteil können die Lenker der Radaufhängung des Fahrzeugs angelenkt sein. Zudem kann das Führungsteil bewegungsentkoppelt, das heißt über ein Drehlager auf dem achsseitigen Drehteil abgestützt sein. Das Führungsteil kann, ähnlich wie das radseitige Trägerteil, radial außerhalb des achsseitigen Drehteils angeordnet sein. In diesem Fall kann das Führungsteil über eine radial innere Lagerstelle auf dem achsseitigen Drehteil abgestützt sein.

Die Erfindung und ihre vorteilhaften Aus- und Weiterbildungen sowie deren Vorteile werden nachfolgend anhand von Zeichnungen näher erläutert.

Es zeigen:
- Fig. 1: eine Prinzipdarstellung der Vorrichtung zum Verstellen von Spur- und Sturzwinkel eines Kraftfahrzeugrades;
- Fig. 2: in einem Halbschnitt die obere Hälfte der Vorrichtung in einer gegenständlichen Ausführung;
- Fig. 3: im Vollschnitt die Vorrichtung mit angebautem Fahrzeugrad;
- Fig. 4: eine Schnittdarstellung entlang der Schnittebene I-I aus der Fig. 3;
- Fig. 5a und 5b: den Radträger jeweils in einer Ansicht von oben und in einer Ansicht von hinten; und
- Fig. 6 bis 9: jeweils Prinzipdarstellungen unterschiedlicher Koppelanordnungen zwischen dem radseitigen Trägerteil und dem achsseitigen Führungsteil des Radträgers, wobei die in der Fig. 9 gezeigte Prinzipdarstellung nicht von der Erfindung umfasst ist.

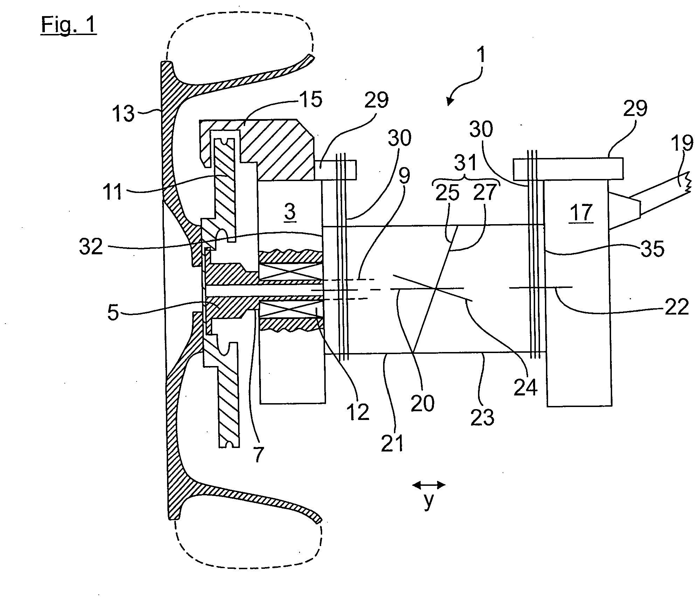

In der Fig. 1 ist zum einfacheren Verständnis der Erfindung eine grob schematische Darstellung eines nicht von der Erfindung umfassten, aus dem Stand der Technik bekannten Radträgers 1 eines Fahrzeugrads 13 gezeigt.

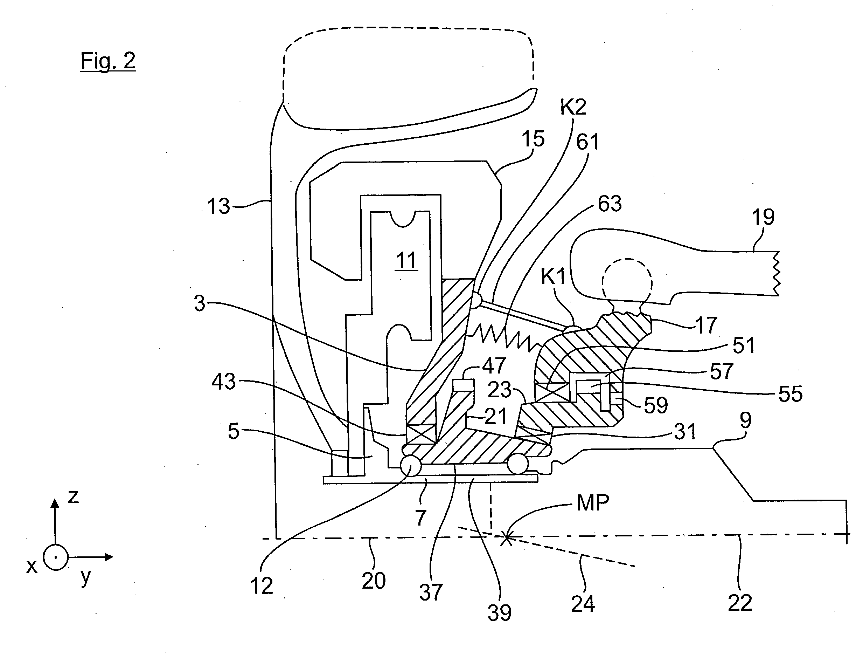

Der Radträger 1 weist ein Trägerteil 3 auf, in dem ein Radflansch 5 mit seinem Nabenabschnitt 7 drehbar in einem Radlager 12 gelagert ist. Am Radflansch 5 ist eine Bremsscheibe 11 sowie ein Fahrzeugrad 13 mit seiner Felge montiert. Die Bremsscheibe 11 ist zusammen mit einem am Trägerteil 3 montierten Bremssattel 15 Bestandteil einer Bremsanlage. Durch den Radträger 1 hindurch ist eine, das Fahrzeugrad 13 antreibende Gelenkwelle geführt, an dessen Gleichlaufgelenk (nur in den Fig. 2 bis 4 mit Bezugsziffer 9 gezeigt) eine ebenfalls nicht dargestellte Zentralschraube eingeschraubt ist, mit der über die Radnabe 5 und das Gleichlaufgelenk 9 das Radlager 12 verspannt wird.

Ferner weist der Radträger 1 ein Führungsteil 17 auf, an dem in der Fig. 1 beispielhaft ein Lenker 19 der Radaufhängung angelenkt ist. Zwischen dem Trägerteil 3 und dem Führungsteil 17 sind als Stellelemente zwei Drehteile 21, 23 vorgesehen. Das Drehteil 21 ist unter Bildung einer Drehteil-Achse 20 an einer Lagerstelle 32 drehbar mit dem Trägerteil 3 verbunden. Das Drehteil 23 ist unter Bildung der Drehachse 22 an einer Lagerstelle 35 mit dem Führungsteil 17 verbunden. In der Fig. 1 sind die beiden Drehteile 21, 23 über plane Schrägflächen 25, 27 zueinander in Gleitlagerung und über eine Drehachse 24 verdrehbar miteinander verbunden. Die Drehachse 24 ist in der Fig. 1 senkrecht zu den Schrägflächen 25, 27 sowie in einem definierten Winkel zur Drehachse 22 des achsseitigen Drehteils 23 geneigt ausgerichtet.

In der Fig. 1 ist beispielhaft die Drehteil-Achse 20 lageidentisch mit der Radachse. In Abkehr davon kann jedoch das Drehteil 21 nicht koaxial zur Radachse angeordnet sein, sondern können die Drehteil-Achse 20 und die Radachse zueinander schräggestellt sein.

Sowohl am Trägerteil 3 als auch am Führungsteil 17 ist jeweils ein elektrischer Stellmotor 29 vorgesehen, der mit den Drehteilen 21, 23 über Zahnradtriebe 30 trieblich verbunden ist. Mittels der Stellmotoren 29 können die beiden Drehteile 21, 23 gleichsinnig oder gegensinnig in beide Drehrichtungen verdreht werden, wodurch das Trägerteil 3 relativ zum Führungsteil 17 eine Schwenkbewegung oder Taumelbewegung um einen Momentanpol MP (Fig. 2 bis 5) ausführt und so den Spurwinkel und/oder den Sturzwinkel des Fahrzeugrads 13 entsprechend verändert.

In der Fig. 1 ist also zwischen dem radseitigen Trägerteil 3 und dem radseitigen Drehteil 21 die Lagerstelle 32 gebildet, zwischen den beiden Drehteilen 21, 23 die Lagerstelle 31, bestehend aus den beiden Schrägflächen 25, 27, sowie zwischen dem achsseitigen Drehteil 23 und dem Führungsteil 17 eine weitere Lagerstelle 35 gebildet.

In der Fig. 2 ist der erfindungsgemäße Radträger 1 gezeigt. Im Unterschied zur Fig. 1 sind die beiden Drehteile 21, 23 nicht mehr über plane Schrägflächen 25, 27 in Anlage, um die schräggestellte Drehachse 24 zu definieren, sondern an einer Drehlagerstelle 31.

Zudem ist in der Fig. 2 das Radlager 12 nicht mehr unmittelbar im radseitigen Trägerteil 3 integriert, sondern vielmehr unmittelbar innerhalb des radseitigen Drehteils 21. In der Fig. 2 sind die Lageraußenbahnen und die Lagerinnenbahnen des Radlagers 12 rein exemplarisch unmittelbar im Innenumfang des radseitigen Drehteils 21 sowie unmittelbar im Außenumfang des Nabenabschnittes 7 des Radflansches 5 eingearbeitet. Entsprechend dient in der Fig. 2 das radseitige Drehteil 21 in Doppelfunktion auch als ein äußeres Lagergehäuse des Radlagers 12. Am Außenumfang des radseitigen Drehteils 21 ist in Fahrzeugquerrichtung y außen das Trägerteil 3 über eine Lagerstelle 43 radial außen auf dem radseitigen Drehteil 21 abgestützt. Die Lagerstelle 43 muß so ausgelegt sein, dass Kippmomente aufgenommen werden können.

In Abkehr von der Fig. 2 kann in einer technischen Umsetzung das Radlager 12 demontierbar ausgeführt sein, und zwar mit einem radial äußeren Lagergehäuse, das demontierbar, das heißt zum Beispiel im Presssitz oder durch Verschraubung, am Innenumfang des Drehteils 21 montiert ist, und/oder mit einem radial inneren Lagergehäuse, das am Außenumfang der Radnabe 5 montierbar ist.

Wie aus der Fig. 2 weiter hervorgeht, sind die Lagerstelle 43 sowie die Drehlagerstelle 31 rein exemplarisch an axial gegenüberliegenden Seiten des Drehteils 21 ausgebildet, wobei dazwischen ein Zahnradabschnitt 47 positioniert ist, der Bestandteil des Zahnradtriebs 30 (Fig. 1) ist.

Das achsseitige Führungsteil 17 ist - analog zum radseitigen Trägerteil 3 - an einem Drehlager 51 radial außen auf dem achsseitigen Drehteil 23 abgestützt. Im weiteren Verlauf in der Fahrzeugquerrichtung y nach innen ist am Außenumfang des achsseitigen Drehteils 23 beispielhaft ein weiterer Zahnradabschnitt 55 angeformt, der ebenfalls Bestandteil des Zahnradtriebs 30 ist. Der Zahnradabschnitt 55 des achsseitigen Drehteils 23 ist in einem Ringraum 57 positioniert, der in der Fahrzeugquerrichtung y nach außen durch das Drehlager 51 begrenzt ist und nach innen durch eine Ringdichtung 59 begrenzt ist, die zwischen dem Führungsteil 17 und dem achsseitigen Drehteil 23 angeordnet ist.

Erfindungsgemäß trägt das radseitige Trägerteil 3 - neben zum Beispiel einer elektronischen Parkbremse - nur noch den Bremssattel 15 sowie den Antriebsmotor 29 für das radseitige Drehteil 21, jedoch nicht mehr das Radlager 12. Dadurch wird speziell das zwischen dem Trägerteil 3 und dem radseitigen Drehteil 21 angeordnete Drehlager 43 aus dem Radkraftfluss genommen. Dies führt dazu, dass bezogen auf die auftretenden Radkräfte nur noch drei Lagerstellen in Serie geschaltet sind, und zwar das Radlager 12, das Drehlager 31 sowie das Stützlager 51, nicht jedoch die Lagerstelle 43, an der das Trägerteil 3 auf dem radseitigen Drehteil 21 abgestützt ist. Von daher kann die auf dem radseitigen Drehteil 21 sitzende Lagerstelle 43 wesentlich kleiner ausgelegt sein, da die dort einwirkenden Radkräfte und -momente sehr viel geringer ausfallen. Durch Wegfall der Lagerstelle 43 aus dem Radkraftfluss erhöht sich zudem die Sturzsteifigkeit des Lagerverbundes, wodurch die verbleibenden Lager, das heißt das Radlager 12, das Drehlager 31 sowie das Stützlager 51, bei - im Vergleich zum Stand der Technik - gleichbleibender Sturzsteifigkeit kleiner ausgelegt werden können.

Zwischen dem Trägerteil 3 und dem Führungsteil 17 ist in der Fig. 2 eine Koppelstange 61 montiert. Diese wirkt als ein Drehmomentübertragungselement, über das Drehmomente, insbesondere ein Bremsmoment und/oder Motorenmomente des äußeren Drehantriebs 29, vom Trägerteil 3 zum Führungsteil 17 übertragbar ist, und zwar unter Überbrückung der achs- und radseitigen Drehteile 21, 23. Die Koppelstange 61 ist beispielhaft radial außerhalb einer umlaufenden Gummimanschette 63 angeordnet, die die Drehteile 21, 23 und deren Lagerstellen schmutzdicht abdichtet.

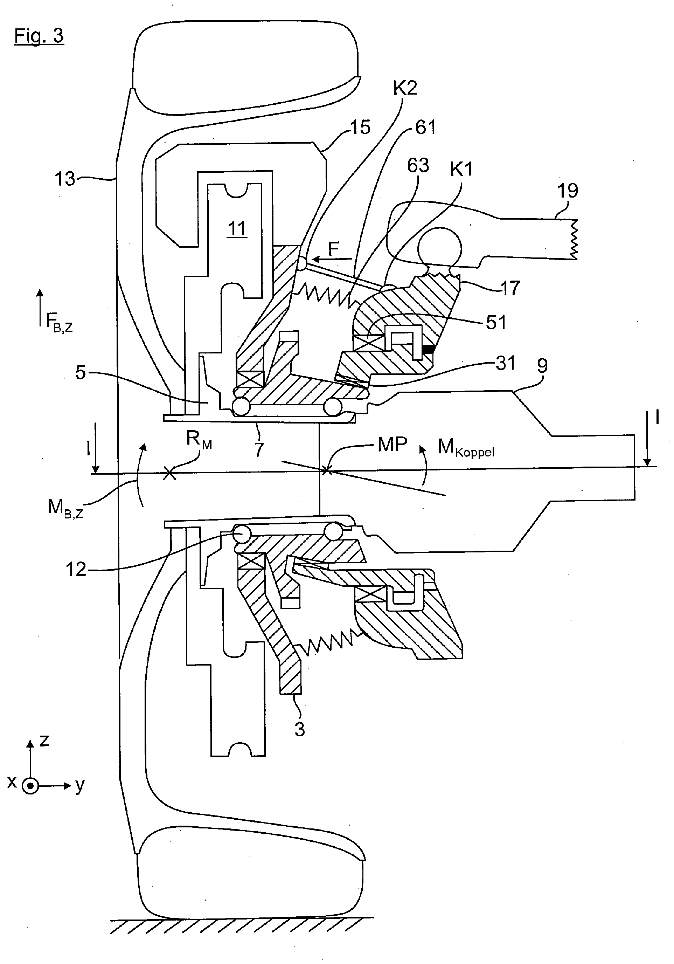

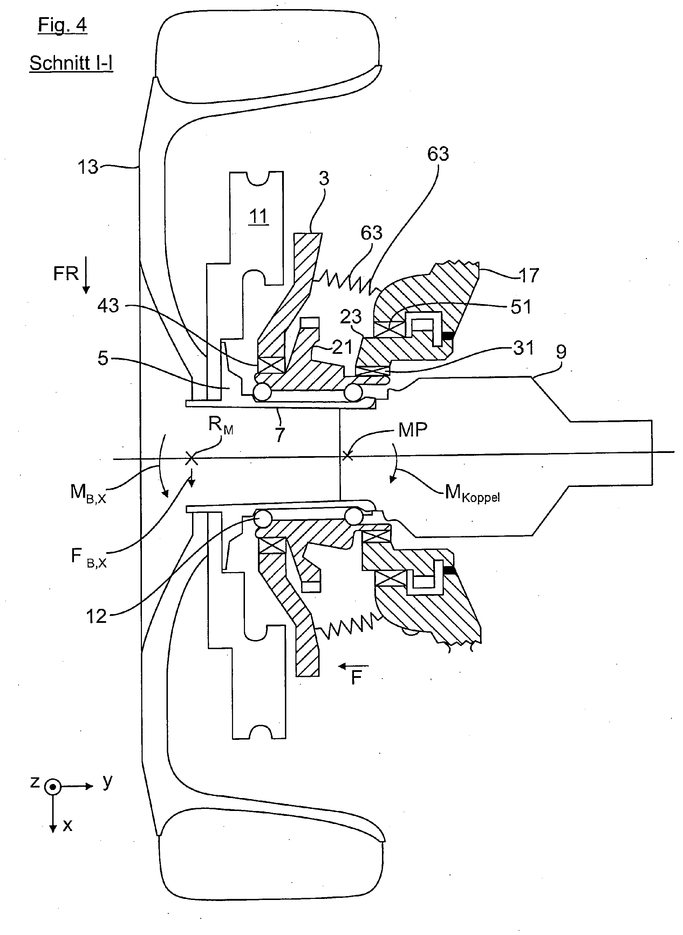

Die Koppelstange 61 ist mit ihren Anlenkstellen K1 und K2 so am radseitigen Trägerteil 3 und am achsseitigen Führungsteil 17 positioniert, dass sich bei einem Bremsvorgang eine gerichtete Kraftkomponente F (Fig. 3 oder 4) ergibt, mit der das radseitige Trägerteil 3 beaufschlagbar ist.

Beim Bremsvorgang wirken Kräfte und Momente auf das Fahrzeugrad 13, von denen in der Fig. 4 beispielhaft eine Bremskraft-Längskomponente F_{B,x} hervorgehoben ist. Die Bremskraft-Längskomponente F_{B,x} wirkt auf die Radmitte R_{M}, die in der Fig. 4 um einen Hebelarm vom Momentanpol MP beabstandet ist, wodurch ein Längsmoment M_{B,x} erzeugt wird, das das Fahrzeugrad 13 in Richtung Nachspur drückt. Das Längsmoment M_{B,x} wird über den Nabenabschnitt 7 des Radflansches 5 sowie über das Radlager 12 bis auf das radseitige Drehteil 21 übertragen.

Zudem greift beim Bremsvorgang am Fahrzeugrad 13 (Hinterrad) aufgrund des Bremsnickausgleichs eine in der Fig. 3 angedeutete, nach oben gerichtete Bremskraft-Vertikalkomponente F_{B,z} an, wodurch ein Vertikalmoment M_{B,z} erzeugt wird, das zu einer Sturzmomentänderung am Aktor führt.

Diese exemplarisch in den Fig. 3 oder 4 hervorgehobenen Momente M_{B,x} und M_{B,z} summieren sich (gegebenenfalls zusammen mit noch anderen, beim Bremsvorgang auftretenden Momenten) zu einem Gesamt-Fahrzeugradmoment M_{Reifen} auf, das als ein Reaktionsmoment auf die Drehteile 21, 23 einwirkt. Das Gesamt-Fahrzeugradmoment M_{Reifen} kann, muß aber nicht zwangsläufig identisch mit dem Reaktionsmoment sein, das unmittelbar den Drehantrieb der Drehteile 21, 23 beaufschlagt. Vielmehr kann das Reaktionsmoment auch vom Gesamt-Fahrzeugradmoment M_{Reifen} unterschiedlich sein. Dies hängt zum Beispiel von den aktuellen Drehpositionen der Drehteile, von der aktuellen Lage der zwischen den Drehteilen gebildeten Schrägebene und/oder der Aktoreigenübersetzung ab.

Damit das auf die Drehteile 21, 23 einwirkende Reaktionsmoment nicht zu einer unbeabsichtigten Drehbewegung der Drehteile 21, 23 führt, erfolgt im Stand der Technik eine dazu korrespondierende Gegensteuerung des Zahnradtriebes 30 des radseitigen und/oder des achsseitigen Drehteils 21,23.

Im Unterschied dazu wird erfindungsgemäß beim Bremsvorgang mittels der Koppelstange 61 das Gesamt-Fahrzeugradmoment M_{Reifen} in die gerichtete Kraftkomponente F umgewandelt, mit der sich die Koppelstange 61 beim Bremsvorgang gegen das radseitige Trägerteil 3 verstemmt, das heißt das radseitige Trägerteil 3 wird an der radseitigen Anlenkstelle K2 der Koppelstange 61 mit der gerichteten Kraftkomponente F beaufschlagt, wodurch ein Gegenhaltemoment M_{Koppel} erzeugt wird, das dem Gesamt-Fahrzeugradmoment M_{Reifen} so entgegenwirkt, dass die Reaktionsmomente auf die Drehteile 21, 23 möglichst gering sind.

Die genaue Lage der Anlenkstellen K1, K2 der Koppelstange 61 hängt von den geometrischen Gegebenheiten des Radträgers ab und kann unter Zuhilfenahme der Fachliteratur (etwa das Fachbuch "Gelenke und Gelenkwellen" von Schmelz, Seherr-Thoss, Aucktor) berechnet werden. Beispielhaft können die Positionen der Anlenkstellen K1, K2 der Koppelstange 61 so bestimmt werden, dass im kompletten Bewegungsraum des Fahrzeugrads 13, das heißt zum Beispiel in einem Spurwinkelbereich von ± 6,5° und in einem Sturzwinkelbereich zwischen -5° und +2,5°, das beim Bremsvorgang auf die Drehteile 21, 23 einwirkende, verbleibende Moment möglichst gering ist. Das verbleibende Moment berechnet sich aus der Differenz zwischen dem von der Koppelstange 61 ausgeübten Gegenhaltemoment M_{Koppel} und dem oben erwähnten Gesamt-Fahrzeugradmoment M_{Reifen}, und zwar unter Berücksichtigung einer Aktoreigenübersetzung im Betriebspunkt für die jeweilige Kraftkomponente.

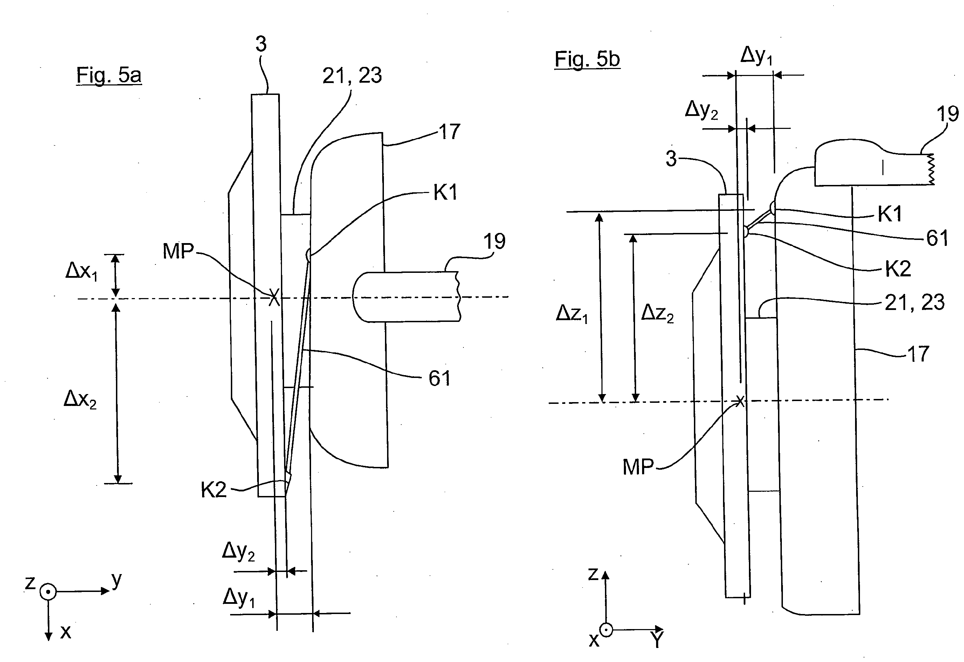

Entscheidend bei der Positionierung der Koppelstangen-Anlenkstellen K1, K2 sind deren Abstände zum Momentanpol MP in den Raumrichtungen x, y, z, wie es in den Fig. 5a und 5b verdeutlicht ist. Demnach sind die Anlenkstellen K1, K2 in der Fahrzeugquerrichtung y betrachtet mit Abständen Δy_{1,} Δy₂ innerhalb des Momentanpols MP positioniert. Zudem sind die Anlenkstellen K1, K2 in der Fahrzeuglängsrichtung x betrachtet um Abstände Δx₁, Δx₂ vor und hinter dem Momentanpol MP positioniert. In der Fahrzeughochrichtung z sind die Anlenkstellen K1, K2 um Abstände Δz₁, Δz₂ außerhalb (das heißt in der Fig. 5b oberhalb) des Momentanpols MP positioniert. Wie aus den Fig. 5a und 5b weitere hervorgeht, sind die Anlenkstellen K1 und K2 der Koppelstange 61, in der Fahrzeugquerrichtung y betrachtet, nicht in Flucht hintereinander ausgerichtet, sondern in der Fahrzeuglängsrichtung x um einen Abstand voneinander beabstandet.

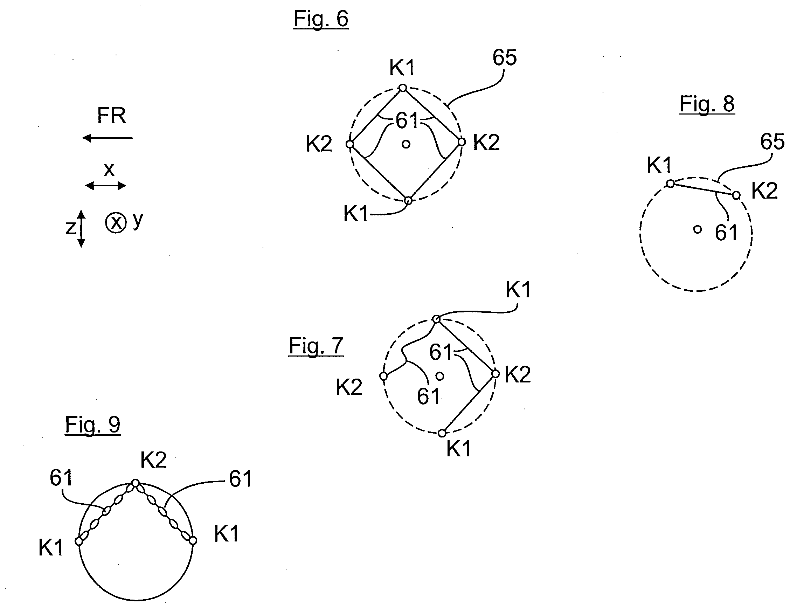

In den folgenden Fig. 6 bis 9 sind grob vereinfacht Ersatzbilder gezeigt, die weitere Varianten des Drehmomentübertragungselementes 61 veranschaulichen. Demzufolge können gemäß der Fig. 6 nicht nur eine einzige Koppelstange, sondern vielmehr insgesamt bis zu vier Koppelstangen vorgesehen sein, die umfangsverteilt um die Radachse angeordnet sind und an radseitigen und achsseitigen Koppelstellen K1 und K2 angelenkt sind. Die Koppelstellen K1 und K2 liegen in der Fahrzeugquerrichtung y betrachtet allesamt auf einer Kreislinie 65, die beispielhaft die Außenkontur eines - im Vergleich zu den Koppelstangen wesentlich bauraumintensiveren - Kardanrings eines Kardangelenkes wiedergibt, wie es beispielhaft in der DE 10 2009 058 489 A1 zwischen dem radseitigen Trägerteil und dem achsseitigen Führungsteil 17 angeordnet ist.

In der Fig. 7 sind beispielhaft insgesamt drei Koppelstangen 61 vorgesehen, von denen sich zwei Koppelstangen 61 geradlinig erstrecken, während die dritte Koppelstange 61 zum Beispiel bauraumbedingt einen S-Schlag aufweist. In der Fig. 8 ist lediglich eine Koppelstange 61 gezeigt, deren Positionierung im Wesentlichen der Koppelstangen-Positionierung in den Fig. 2 bis 5 entspricht. In der Fig. 9 ist das Drehmomentübertragungselement 61 nicht durch eine Koppelstange gebildet, sondern vielmehr durch Koppelglieder, die nur auf Zug beanspruchbar sind, zum Beispiel Ketten oder Zugbänder.

## Patentansprüche

1. Vorrichtung zum Verstellen von Sturz und/oder Spur eines Fahrzeugrads (13) eines Kraftfahrzeugs, mit einem Radträger (1), der mehrteilig mit einem radseitigen Trägerteil (3) und einem achsseitigen Führungsteil (17) sowie mit dazwischen angeordneten Drehteilen (21, 23) aufgebaut ist, die an einer gemeinsamen Lagerstelle (31) um eine Drehachse (24) zueinander verdrehbar abgestützt sind, um die das radseitige Drehteil (21) zur Spur- oder Sturzverstellung des Fahrzeugrads (13) um einen Taumelpunkt (MP) verschwenkbar ist, wobei das radseitige Trägerteil (3) einen mit einer Bremsscheibe (11) des Fahrzeugrads (13) zusammenwirkenden Bremssattel (15) trägt, und wobei das bei einem Bremsvorgang mit einem Bremsmoment beaufschlagte radseitige Trägerteil (3) über eine Drehmomentbrücke (61) auf dem achsseitigen Führungsteil (17) abstützbar ist, wobei die Drehmomentbrücke (61) als ein Drehmomentübertragungselement ausgelegt ist, das bei der Abstützung des mit dem Bremsmoment beaufschlagten Trägerteils (3) eine gerichtete Kraftkomponente (F) erzeugt, mit der das radseitige Trägerteil (3) beaufschlagbar ist, **dadurch gekennzeichnet, dass** das Drehmomentübertragungselement (61) zumindest eine Koppelstange ist, die auf Zug und Druck beanspruchbar ist, und dass die Koppelstange jeweils an einer radseitigen Anlenkstelle (K2) am radseitigen Trägerteil (3) und an einer achsseitigen Anlenkstelle (K1) am achsseitigen Führungsteil (17) anlenkbar ist.

2. Vorrichtung nach Anspruch 1, **dadurch gekennzeichnet, dass** die Anlenkstellen (K1, K2) des Drehmomentübertragungselements (61) so positioniert sind, dass das Drehmomentübertragungselement (61) zwischen dem Trägerteil (3) und dem Führungsteil (17) verstemmbar ist.

3. Vorrichtung nach Anspruch 1 oder 2, **dadurch gekennzeichnet, dass** beim Bremsvorgang das Drehmomentübertragungselement (61) ein Gegenhaltemoment (M_{Koppel}) generiert, mit dem das vom Fahrzeugrad (13) auf die Drehteile (21, 23) wirkende Reaktionsmoment reduzierbar ist, das aus einem Gesamt-Fahrzeugradmoment (M_{Reifen}) resultiert.

4. Vorrichtung nach Anspruch 3, **dadurch gekennzeichnet, dass** das Gesamt-Fahrzeugradmoment (M_{Reifen}) sich insbesondere aus einem Längsmoment (M_{B,x}), das durch eine auf die Fahrzeugradmitte (RM) wirkende Bremskraft-Längskomponente (F_{B,x}) erzeugt wird, und aus einem auf das Fahrzeugrad (13) wirkenden Vertikalmoment (M_{B,z}) zusammensetzt, das durch einen Bremsnickausgleich erzeugt wird.

5. Vorrichtung nach einem der vorhergehenden Ansprüche, **dadurch gekennzeichnet, dass** der Radmittelpunkt (RM) des Fahrzeugrads (13) und der Taumelpunkt bzw. der Momentanpol (M_{P}) um einen Hebelarm voneinander beabstandet sind.

6. Vorrichtung nach einem der vorhergehenden Ansprüche, **dadurch gekennzeichnet, dass** die Anlenkstellen (K1, K2) des Drehmomentübertragungselements (61) zum Momentanpol (MP) in den Raumrichtungen (x, y, z) beabstandet sind.

7. Vorrichtung nach einem der vorhergehenden Ansprüche, **dadurch gekennzeichnet, dass** die Anlenkstellen (K1, K2) des Drehmomentübertragungselements (61) in der Fahrzeugquerrichtung (y) betrachtet mit den Abständen (Δy₁, Δy₂) vom Momentanpol (MP) nach fahrzeuginnen versetzt sind, und/oder dass die Anlenkstellen (K1, K2) in der Fahrzeuglängsrichtung (x) betrachtet um Abstände (Δx₁, Δx₂) vor und hinter dem Momentanpol (MP) positioniert sind, und/oder dass die Anlenkstellen (K1, K2) in der Fahrzeughochrichtung (z) um Abstände (Δz₁, Δz₂) vom Momentanpol (MP) versetzt sind.

8. Vorrichtung nach einem der vorhergehenden Ansprüche, **dadurch gekennzeichnet, dass** im radseitigen Drehteil (21) ein Radlager (12) integriert ist, in dem ein Radnabenabschnitt (7) eines, das Fahrzeugrad (13) tragenden Radflansches (5) drehbar gelagert ist, und/oder dass das Trägerteil (3) über eine Lagerstelle (43) auf dem radseitigen Drehteil (21) abgestützt ist.

9. Vorrichtung nach Anspruch 8, **dadurch gekennzeichnet, dass** das Trägerteil (3) radial außerhalb des radseitigen Drehteils (21) angeordnet ist, und dass insbesondere das Trägerteil (3) über eine radial innere Lagerstelle (43) auf dem radseitigen Drehteils (21) abgestützt ist.

10. Vorrichtung nach Anspruch 8 oder 9, **dadurch gekennzeichnet, dass** das Radlager (12) demontierbar ausgeführt ist, und zwar mit einem radial inneren Lagergehäuse und einem radial äußeren Lagergehäuse, das demontierbar, das heißt zum Beispiel im Presssitz oder durch Verschraubung, an einem Außenumfang der Radnabe (5) bzw. an einem Innenumfang des Drehteils (21) montiert ist, oder dass das radseitige Drehteil (21) unmittelbar das radial äußere Lagergehäuse des Radlagers (12) bildet, und dass radial innerhalb des, das äußere Lagergehäuse bildende Drehteils (21) ein Radnabenabschnitt (7) eines, das Fahrzeugrad (13) tragenden Radflansches (5) drehbar gelagert ist.

## Claims

1. Device for adjusting the camber and/or track of a vehicle wheel (13) of a motor vehicle, comprising a wheel carrier (1), which consists of multiple parts with a wheel-side carrier part (3) and an axle-side guide part (17) and rotary parts (21, 23) arranged in between, which are supported rotatably relative to one another on a common bearing point (31) about an axis of rotation (24), about which the wheel-side rotary part (21) can be pivoted for adjusting the track or camber of the vehicle wheel (13) about a wobble point (MP), wherein the wheel-side carrier part (3) supports a brake calliper (15) cooperating with a brake disc (11) of the vehicle wheel (13), and wherein the wheel-side carrier part (3), to which braking torque is applied during a braking process, can be supported by a torque bridge (61) on the axle-side guide part (17), wherein the torque bridge (61) is configured as a torque transmission element, which on the support of the carrier part (3), to which braking torque is applied, produces a directed force component (F) with which the wheel-side carrier part (3) can be charged, **characterised in that** the torque transmission element (61) is at least one coupling bar, which can be subjected to tensile and pressure forces, and **in that** the coupling bar can be attached respectively onto a wheel-side attachment point (K2) on the wheel-side carrier part (3) and onto an axle-side attachment point (K1) on the axle-side guide part (17).

2. Device according to claim 1, **characterised in that** the attachment points (K1, K2) of the torque transmission element (61) are positioned so that the torque transmission element (61) can be caulked between the carrier part (3) and the guide part (17).

3. Device according to claim 1 or 2, **characterised in that** during the braking process the torque transmission element (61) generates a counter moment (M_{Koppel}), by means of which the reaction moment resulting from a total vehicle wheel moment (M_{Reifen}) and conducted from the vehicle wheel (13) to the rotary parts (21, 23) is reducible.

4. Device according to claim 3, **characterised in that** the total vehicle wheel moment (M_{Reifen}) consists in particular of a longitudinal moment (M_{B,x}), which is produced by a braking force longitudinal component (F_{B,x}) acting on the vehicle wheel centre (RM), and a vertical moment (M_{B,z}) acting on the vehicle wheel (13), which is produced by brake pitching compensation.

5. Device according to any of the preceding claims, **characterised in that** the wheel centre (RM) of the vehicle wheel (13) and the wobble point and instantaneous centre of rotation (M_{P}) are spaced apart from one another by lever arm.

6. Device according to any of the preceding claims, **characterised in that** the attachment points (K1, K2) of the torque transmission element (61) are spaced apart from the instantaneous centre of rotation (MP) in spatial directions (x, y, z).

7. Device according to any of the preceding claims, **characterised in that** the attachment points (K1, K2) of the torque transmission element (61) as viewed in vehicle transverse direction (y) are offset by respective distances (Δy₁, Δy₂) from the instantaneous centre of rotation (MP) towards the interior of the vehicle, and/or **in that** the attachment points (K1, K2) as viewed in the vehicle longitudinal direction (x) are positioned before and behind the instantaneous centre of rotation (MP) by respective distances (Δx₁, Δx₂), and/or **in that** the attachment points (K1, K2) are offset from the instantaneous centre of rotation (MP) in vehicle vertical direction (z) by respective distances (Δz₁, Δz₂).

8. Device according to any of the preceding claims, **characterised in that** a wheel bearing (12) is integrated into the wheel-side rotary part (21), in which wheel bearing a wheel hub section (7) of a wheel flange (5) supporting the vehicle wheel (13) is rotatably mounted, and/or **in that** the carrier part (3) is supported by a bearing point (43) on the wheel-side rotary part (21).

9. Device according to claim 8, **characterised in that** the carrier part (3) is arranged radially outside the wheel-side rotary part (21), and **in that** in particular the carrier part (3) is supported by a radially inner bearing point (43) on the wheel-side rotary part (21).

10. Device according to claim 8 or 9, **characterised in that** the wheel bearing (12) is configured to be detachable, and comprising a radially inner bearing housing and a radially outer bearing housing, which can be mounted to be detachable, i.e. for example in a press-fit or by a screw connection, on an outer circumference of the wheel hub (5) or on an inner circumference of the rotary part (21), or **in that** the wheel-side rotary part (21) directly forms the radially outer bearing housing of the wheel bearing (12), and **in that** radially inside the rotary part (21) forming the outer bearing housing a wheel hub section (7) of a wheel flange (5) supporting the vehicle wheel (13) is rotatably mounted.

## Revendications

1. Dispositif de réglage du carrossage et/ou du pincement d'une roue de véhicule (13) d'un véhicule automobile, avec un support de roue (1), qui est construit en plusieurs parties avec une partie de support (3) côté roue et une partie de guidage (17) côté essieu ainsi qu'avec des parties rotatives (21, 23) agencées entre celles-ci et soutenues au niveau d'un point d'appui commun (31) de manière à pouvoir tourner l'une par rapport à l'autre autour d'un axe de rotation (24) autour duquel la partie rotative côté roue (21) peut pivoter autour d'un point d'oscillation (MP) afin de régler le carrossage ou le pincement de la roue de véhicule (13),
dans lequel la partie de support côté roue (3) porte un étrier de frein (15) qui coopère avec un disque de frein (11) de la roue de véhicule (13)
et dans lequel la partie de support côté roue (3) soumise à un couple de freinage lors d'une opération de freinage peut être soutenue sur la partie de guidage côté essieu (17) par l'intermédiaire d'un pont de couple (61),
lequel pont de couple (61) est conçu comme un élément de transfert de couple qui, lors du soutien de la partie de support (3) soumise au moment de freinage, produit une composante de force orientée (F) avec laquelle la partie de support côté roue (3) peut être sollicitée,
**caractérisé en ce que** l'élément de transfert de couple (61) est au moins une biellette de renvoi qui peut être sollicitée en traction et pression et **en ce que** la biellette de renvoi peut être articulée à chaque fois au niveau d'un point d'articulation côté roue (K2) au niveau de la partie de support côté roue (3) et au niveau d'un point d'articulation côté essieu (K1) au niveau de la partie de guidage côté essieu (17).

2. Dispositif selon la revendication 1, **caractérisé en ce que** les points d'articulation (K1, K2) de l'élément de transfert de couple (61) sont positionnés de telle sorte que l'élément de transfert de couple (61) peut être maté entre la partie de support (3) et la partie de guidage (17).

3. Dispositif selon la revendication 1 ou 2, **caractérisé en ce que,** lors de l'opération de freinage, l'élément de transfert de couple (61) produit un couple en contrepoint (M_{Koppel}) avec lequel peut être réduit le couple de réaction agissant de la roue de véhicule (13) sur les parties rotatives (21, 23) et résultant d'un couple total de roue de véhicule (M_{Reifen}).

4. Dispositif selon la revendication 3, **caractérisé en ce que** le couple total de roue de véhicule (M_{Reifen}) se compose en particulier d'un couple longitudinal (M_{B,x}), qui est produit par une composante longitudinale de force de freinage (F_{B,x}) qui agit sur le centre de roue de véhicule (RM), et d'un couple vertical (M_{B,z}), qui agit sur la roue de véhicule (13) et qui est produit par une compensation de tangage au freinage.

5. Dispositif selon l'une quelconque des revendications précédentes, **caractérisé en ce que** le point central de roue (RM) de la roue de véhicule (13) et le point d'oscillation ou le centre instantané de rotation (M_{P}) autour d'un arbre de levier sont à une certaine distance l'un de l'autre.

6. Dispositif selon l'une quelconque des revendications précédentes, **caractérisé en ce que** les points d'articulation (K1, K2) de l'élément de transfert de couple (61) sont à une certaine distance du centre instantané de rotation (MP) dans les directions spatiales (x, y, z).

7. Dispositif selon l'une quelconque des revendications précédentes, **caractérisé en ce que** les points d'articulation (K1, K2) de l'élément de transfert de couple (61) sont décalés, vus dans la direction transversale de véhicule (y), de distances (Δy₁, Δy₂) par rapport au centre instantané de rotation (MP) vers l'intérieur de véhicule et/ou **en ce que** les points d'articulation (K1, K2) sont positionnés, vus dans la direction longitudinale de véhicule (x), avant et après le centre instantané de rotation (MP) avec les distances (Δx₁, Δx₂) et/ou **en ce que** les points d'articulation (K1, K2) sont décalés de distances (Δz₁, Δz₂) par rapport au centre instantané de rotation (MP) dans la direction verticale de véhicule (z).

8. Dispositif selon l'une quelconque des revendications précédentes, **caractérisé en ce que** dans la partie rotative côté roue (21) est intégré un palier de roue (12) dans lequel un tronçon de moyeu de roue (7) d'un boudin de roue (5) portant la roue de véhicule (13) est logé de manière à pouvoir tourner et/ou **en ce que** la partie de support (3) est appuyée sur la partie rotative côté roue (21) par l'intermédiaire d'un point d'appui (43).

9. Dispositif selon la revendication 8, **caractérisé en ce que** la partie de support (3) est agencée radialement à l'extérieur de la partie rotative côté roue (21) et **en ce que**, en particulier, la partie de support (3) est appuyée sur la partie rotative côté roue (21) par l'intermédiaire d'un point d'appui (43) radialement à l'intérieur.

10. Dispositif selon la revendication 8 ou 9, **caractérisé en ce que** le palier de roue (12) est réalisé démontable, à savoir avec un carter de palier radialement à l'intérieur et avec un carter de palier radialement à l'extérieur, qui est monté démontable, c'est-à-dire par exemple par ajustage serré ou par vissage, au niveau d'une circonférence extérieure du moyeu de roue (5) ou au niveau d'une circonférence intérieure de la partie rotative (21), ou **en ce que** la partie rotative côté roue (21) forme directement le carter de palier radialement extérieur du palier de roue (12), et **en ce qu'**une partie de moyeu de roue (7) d'un boudin de roue (5) portant la roue de véhicule (13) est montée de manière à pouvoir tourner radialement à l'intérieur de la partie rotative (21) formant le carter de palier extérieur.
